# FASCICULE DE BREVET EUROPEEN

(11) **EP 4 441 350 B1**
(45) Date de publication et mention de la délivrance du brevet: **18.03.2026**
(21) Numéro de dépôt: 22826064.2
(22) Date de dépôt: 30.11.2022
(51) Int. Cl.: F02C 3/06, F02K 3/06, F02K 3/077, F02C 7/14, F02C 7/18, F28D 7/00, F28D 7/08, F28F 7/02, F28F 13/08, F28D 21/00

(54) **TURBOMACHINE AXIALE TRIPLE-FLUX AVEC ÉCHANGEUR DE CHALEUR DIVERGEANT DANS LE TROISIÈME FLUX**
AXIALTURBOMASCHINE MIT DREIFACHFLUSS UND DIVERGIERENDEM WÄRMETAUSCHER IN DER DRITTEN STRÖMUNG
TRIPLE-FLOW AXIAL TURBOMACHINE COMPRISING A DIVERGING HEAT EXCHANGER IN THE THIRD FLOW

(30) Priorité: 30.11.2021 EP 21211434; 14.12.2021 BE 202105980
(43) Date de publication de la demande: 09.10.2024
(60) Demande divisionnaire: 24201981.8
(73) Titulaire: Safran Aero Boosters SA, 4041 Herstal (BE)
(72) Inventeur: WEICKER, David, 1640 Rhode-Saint-Genèse (BE); CLEYET, Florian, 1640 Rhode-Saint-Genèse (BE); SERVAIS, Bruno, 4041 Herstal (BE)
(74) Mandataire: Ipsilon Luxembourg
(86) Numéro de dépôt international: PCT/EP2022/083801
(87) Numéro de publication internationale: WO 2023/099539

(56) Documents cités:
- EP-A2- 3 892 949
- US-A1- 2021 108 597
- US-B2- 10 502 502
- US-B2- 10 907 500

## Description

### Domaine

L'invention a trait au domaine des turbomachines et plus particulièrement des turbomachines à trois flux. L'invention porte sur l'agencement d'un échangeur de chaleur destiné au refroidissement de l'huile de la turbomachine.

### Art antérieur

Dans une turbomachine (turboréacteur), il est généralement nécessaire de refroidir l'huile du circuit de lubrification. A cet effet, il est connu de disposer un ou plusieurs échangeur(s) de chaleur dans le flux secondaire, c'est-à-dire en aval de la soufflante.

Cependant, la disposition d'un échangeur de chaleur au niveau du circuit secondaire pénalise la performance et le rendement global de la turbomachine. En effet, l'effort de poussée généré par la soufflante est en partie freiné par l'échangeur encombrant. De plus, des perturbations aérodynamiques du flux secondaire peuvent avoir lieu entrainant des vibrations et des nuisances sonores.

Le document de brevet publié EP 3 674 531 A1 divulgue un échangeur de chaleur de type air-huile disposé dans la veine du flux secondaire. Un tel échangeur de chaleur génère des perturbations importantes dans la veine de flux secondaire. En effet, l'air parcouru dans cette veine a une vitesse trop élevée pour que les pertes aérodynamiques ou de poussée soient négligeables.

Le document de brevet publié US 2021/0108597 A1 divulgue une turbomachine comprenant un échangeur de chaleur positionné dans un conduit de soufflante.

L'état de l'art présente donc des inconvénients relatifs à des pénalités de performances, auxquelles s'ajoute la contrainte liée à la fragilité de l'échangeur. En effet, celui-ci ne peut pas être placé directement en amont de la turbomachine pour éviter de perturber son effort de poussée, notamment en raison du risque d'impact avec des corps étrangers qui pourraient pénétrer dans la turbomachine.

### Résumé de l'invention

### Problème technique

L'invention vise à résoudre les inconvénients de la conception/fabrication des turbomachines de l'état de la technique. En particulier, l'invention vise à proposer une solution qui permette un refroidissement efficace dans un encombrement restreint tout en réduisant l'impact sur le rendement de la turbomachine.

### Solution technique

L'invention a trait à une turbomachine axiale, comprenant : un premier bec de séparation apte à séparer un flux d'air entrant en un flux d'air radialement interne et un flux d'air radialement externe, dit flux secondaire ; un deuxième bec de séparation apte à séparer le flux d'air radialement interne en un flux primaire et un flux tertiaire, ledit flux tertiaire étant dans une veine de flux tertiaire radialement externe audit flux primaire ; et un échangeur de chaleur de type air/huile disposé dans la veine de flux tertiaire et comprenant des surfaces d'échange thermique avec l'air et des passages d'huile s'étendant dans ladite veine de flux tertiaire ; et des bras structuraux s'étendant radialement au travers de la veine de flux tertiaire ; remarquable en ce que chaque bras structural présente dans la veine de flux tertiaire une section transversale avec une portion aval présentant une largeur diminuant vers l'aval, l'échangeur de chaleur étant adjacent auxdites portions aval des bras structuraux.

Selon l'invention, les surfaces d'échange thermique sont adjacentes aux portions aval des bras structuraux, lesdites surfaces d'échange thermique présentent un profil circonférentiel divergeant se conformant aux portions aval des bras structuraux.

Selon un mode avantageux de l'invention, le profil circonférentiel divergeant des surfaces d'échange thermique est formé par des profils latéraux directement adjacents aux bras structuraux, lesdits profils latéraux comprenant chacun un profil latéral incliné par rapport à une direction axiale.

Selon un mode avantageux de l'invention, la turbomachine axiale comprend un stator disposé dans la veine du flux tertiaire et en amont de chaque bras structural.

Selon un mode avantageux de l'invention, chaque bras structural est disposé axialement entre un compresseur basse pression et un compresseur haute pression.

Selon un mode avantageux de l'invention, chaque bras structural comprend une portion amont comprenant un bord d'attaque, l'échangeur de chaleur étant agencé en aval dudit bord d'attaque.

Selon un mode avantageux de l'invention, la portion aval de chaque bras structural comprend un bord de fuite, l'échangeur de chaleur étant agencé entre le bord d'attaque et ledit bord de fuite.

Selon un mode avantageux de l'invention, l'échangeur de chaleur est agencé au niveau de la plus grande largeur des bras structuraux.

Selon un mode avantageux de l'invention, la turbomachine axiale comprend un carter interne disposé entre le flux primaire et le flux tertiaire, ledit carter interne comprend un canal « VBV » ayant une sortie au niveau de la veine de flux tertiaire, ladite sortie étant disposée en aval de l'échangeur.

Selon un mode avantageux de l'invention, l'échangeur s'étend circonférentiellement entre deux bras structuraux de manière à ce que ledit échangeur de chaleur soit en contact direct avec chacun desdits deux bras structuraux.

Selon un mode avantageux de l'invention, les surfaces d'échange thermique s'étendant radialement et réparties angulairement dans la veine de flux tertiaire, les surfaces d'échange thermique adjacentes aux portions aval des bras structuraux présentant une inclinaison par rapport à une direction axiale de manière à se conformer auxdites portions aval.

Selon un mode avantageux de l'invention, les surfaces d'échange thermique comprennent des passages d'huile s'étendant de manière fluidique entre une paroi interne et une paroi externe de la veine de flux tertiaire.

Selon un mode avantageux de l'invention, la paroi interne et la paroi externe de la veine de flux tertiaire sont intégralement formées avec les surfaces d'échange.

Selon un mode avantageux de l'invention, le nombre par unité de surface des surfaces d'échange thermique adjacentes au profil latéral est supérieur d'au moins 20% au nombre par unité de surface des surfaces d'échange thermique se trouvant dans une partie centrale de l'échangeur.

Selon un mode avantageux de l'invention, le nombre de surfaces d'échange thermique par unité de surface augmente au fur et à mesure de l'augmentation circonférentielle de la section transversale aux surfaces d'échange thermique.

Selon un mode avantageux de l'invention, le nombre par unité de surface des surfaces d'échange thermique adjacentes à la portion aval augmente de manière progressive suivant l'inclinaison du profil latéral incliné.

### Avantages de l'invention

L'invention est particulièrement avantageuse en ce qu'elle permet de faire circuler dans l'échangeur de chaleur un air qui est froid et à une vitesse adéquate, notamment grâce à la divergence de l'échangeur dans la direction d'écoulement de l'air, assurant ainsi une efficacité du refroidissement. En effet, une bonne efficacité du refroidissement permet l'emploi d'échangeurs moins imposants et donc moins encombrants, moins lourds et moins coûteux.

Par ailleurs, le positionnement de l'échangeur au niveau de la veine du flux tertiaire permet de réduire le risque d'entraver le rendement du moteur ce qui se traduit par une efficacité énergétique et une poussée optimisée qui avantageusement permettent de réduire les émissions des gaz carboniques.

### Description des dessins

L'invention est particulièrement avantageuse en ce qu'elle permet de faire circuler dans l'échangeur de chaleur un air qui est froid et à une vitesse ralentie, grâce à la divergence de l'échangeur dans la direction d'écoulement de l'air, assurant ainsi une efficacité du refroidissement. En effet, une bonne efficacité du refroidissement permet l'emploi d'échangeurs moins imposants et donc moins encombrants, moins lourds et moins coûteux.

Par ailleurs, le positionnement de l'échangeur au niveau de la veine du flux tertiaire permet d'éviter d'entraver le rendement du moteur ce qui se traduit par une efficacité énergétique et une poussée optimisée qui avantageusement permettent de réduire les émissions des gaz carboniques.

### Description des dessins

[Fig.1] est une vue en coupe longitudinale d'une turbomachine comprenant un échangeur de chaleur, selon un premier mode de réalisation de l'invention ;
[Fig.2] est une vue de détail de l'échangeur de chaleur de la turbomachine de la [Fig.1] ;
[Fig.3] est une vue de face de la veine de flux tertiaire comprenant l'échangeur de chaleur, selon le premier mode de réalisation ;
[Fig.4] illustre de manière schématique les trajets d'huile dans l'échangeur de chaleur sur un secteur angulaire, selon le premier mode de réalisation ;
[Fig.5] est une en perspective et en coupe longitudinale d'un échangeur de chaleur d'une turbomachine selon un deuxième mode de réalisation ;
[Fig.6] représente une vue d'au-dessus en coupe de l'échangeur de chaleur dans la veine de flux tertiaire selon le deuxième mode de réalisation ;
[Fig.7] représente une vue d'au-dessus partielle de l'échangeur de chaleur selon un troisième mode de réalisation ;
[Fig.8] illustre une évolution de densité des surfaces d'échange thermique dans les directions axiale et circonférentielle.

### Description d'un mode de réalisation

Dans la description qui va suivre, les termes « interne » et « externe » renvoient à un positionnement par rapport à l'axe longitudinal de rotation d'une turbomachine. La direction axiale correspond à la direction le long de l'axe longitudinal de rotation de la turbomachine. La direction radiale est perpendiculaire à l'axe longitudinal. L'amont et l'aval sont en référence au sens d'écoulement d'un flux dans la turbomachine.

Les figures montrent les éléments de manière schématique et ne sont pas représentées à l'échelle. En particulier, certaines dimensions sont agrandies pour faciliter la lecture des figures.

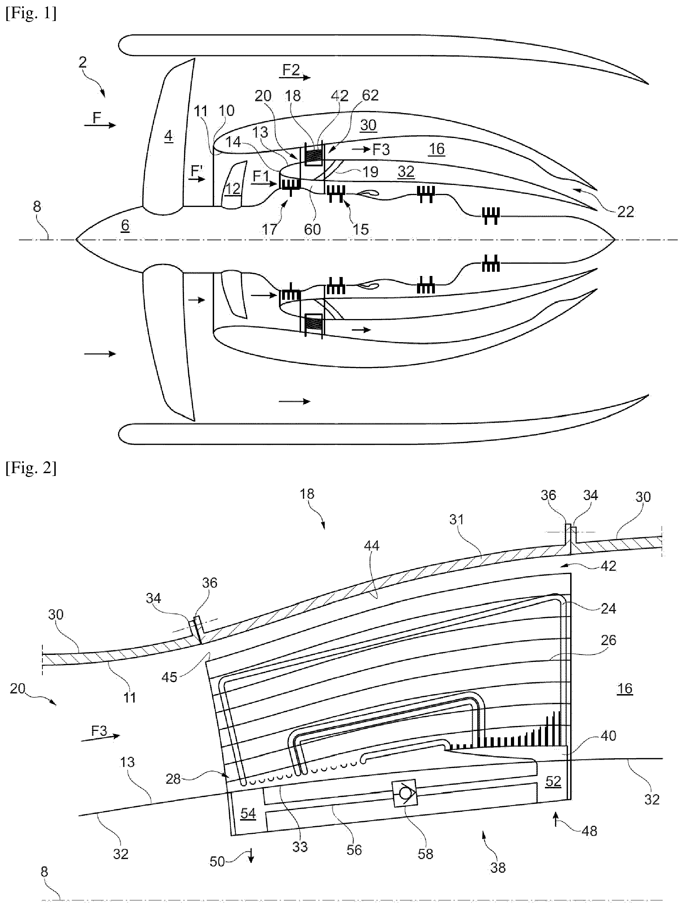

La [Fig.1] illustre une turbomachine 2 selon un premier mode de réalisation. Une hélice 4 solidaire d'un moyeu 6 tourne autour d'un axe longitudinal 8.

La turbomachine 2 évolue dans un flux d'air F dont le mouvement relatif à la turbomachine 2 est généré par la rotation de l'hélice 4 et l'avancement de l'aéronef sur laquelle la turbomachine 2 est montée.

Le flux d'air F est séparé par un premier bec de séparation 10 en un flux d'air radialement interne F' et un flux d'air radialement externe F2, dit flux secondaire F2. L'hélice 4 peut être disposée en amont du premier bec de séparation 10 ou en aval.

Le flux d'air radialement interne F' traverse une roue mobile 12 qui dirige ce dernier vers un deuxième bec de séparation 14 apte à séparer le flux d'air radialement interne F' en un flux primaire F1 et un flux tertiaire F3, ce dernier est distinct du flux secondaire F2.

Le premier bec de séparation 10 comprend une paroi interne formant une première paroi de guidage externe 11 du flux d'air radialement interne F', ladite première paroi de guidage externe 11 formant un profil convexe vu depuis ledit flux d'air radialement interne F'.

Le deuxième bec de séparation 14 comprend une paroi externe formant une deuxième paroi de guidage externe 13 du flux d'air radialement interne F' ayant traversé la roue mobile 12, ladite deuxième paroi de guidage externe 13 formant un profil convexe vu depuis le flux tertiaire F3.

Le flux tertiaire F3 pénètre dans une veine de flux tertiaire 16 radialement externe audit flux primaire F1. Le flux tertiaire F3 traverse un échangeur de chaleur 18 disposé dans la veine de flux tertiaire 16.

On peut voir sur la [Fig.1] que la turbomachine 2 est illustrée de manière symétrique par rapport à l'axe longitudinal 8. En effet, la veine de flux tertiaire 16 est annulaire et circonférentiellement continue sur 360° autour de l'axe longitudinal 8. A cet effet, le flux tertiaire F3 est un flux qui traverse annulairement la veine de flux tertiaire 16.

Dans cette configuration, le flux tertiaire F3 s'étend essentiellement suivant la direction axiale et dans une position radialement comprise entre le flux primaire F1 et le flux secondaire F2.

Le flux tertiaire F3 s'étend dans la veine de flux tertiaire 16 depuis le flux d'air radialement interne F' en aval de la roue mobile 12 et jusqu'au flux secondaire F2 après avoir traversé l'échangeur de chaleur 18.

La turbomachine 2 comprend en outre un stator (non illustré) agencé en amont de l'échangeur de chaleur 18 au niveau de la veine de flux tertiaire 16. Avantageusement, le stator permet de redresser le flux tertiaire F3 avant que ce dernier traverse l'échangeur de chaleur 18 afin de minimiser les perturbations aérodynamiques du flux tertiaire F3 qui peuvent être causées par la roue mobile 12, cela permet d'optimiser l'échange thermique entre l'air et l'huile.

Le stator correspond à une rangée d'aubes statoriques disposée dans la veine de flux tertiaire en aval du bec de séparation 14. Alternativement, le stator peut être disposé en amont du bec de séparation 14 et en aval de la roue mobile 12.

L'échangeur de chaleur 18 s'étend radialement et axialement dans un tronçon amont 20 de la veine de flux tertiaire 16, présentant une section longitudinale divergente dans le sens de l'écoulement du flux tertiaire F3.

L'échangeur de chaleur 18 peut chevaucher axialement un compresseur haute pression 15 ainsi qu'un compresseur basse pression 17, dit « booster » 17, ledit échangeur de chaleur 18 peut aussi être positionné axialement par au-dessus de du compresseur basse pression 17. De préférence, l'échangeur de chaleur 18 est agencé axialement entre le compresseur basse pression 17 et le compresseur haute pression 15.

Un canal « VBV » 19 (Variabe Bleed Valve) ayant une sortie traversante une paroi interne de la veine de flux tertiaire 16 et disposée axialement en aval de l'échangeur de chaleur 18, le canal « VBV » permet d'assurer une fonction de décharge en renvoyant une partie du flux primaire F1 vers le flux tertiaire F3, cela permet d'évacuer par exemple d'éventuels particules de glaces du flux primaire F1 pour éviter le bourrage du compresseur haute pression 15, notamment lorsque le débit du flux primaire F1 devient trop faible.

Avantageusement, l'agencement de la sortie du canal « VBV » 19 en aval de l'échangeur de chaleur de chaleur 18 permet de préserver ce dernier d'un éventuel risque de bourrage.

L'échangeur de chaleur 18 peut s'étendre de manière continue sur 360° dans le tronçon amont 20 de la veine 16 autour de l'axe longitudinal 8 de la turbomachine 2. Préférentiellement, l'échangeur de chaleur 18 s'étend de manière discontinue sur 360° autour de l'axe longitudinal 8 en se subdivisant en plusieurs segments angulaires et chacun peut assurer une fonction d'échange thermique entre l'air et l'huile qui peut être différente d'un segment à un autre. Des exemples des différentes fonctions d'échange thermique seront donnés plus loin dans la présente description.

Le flux tertiaire F3 traverse l'échangeur de chaleur 18 occupant le tronçon amont 20 de la veine 16 a une vitesse ayant un nombre de Mach compris dans un intervalle allant de 0,1 à 0,6, généralement 0,3. Avantageusement, la divergence du tronçon amont 20 de la veine 16 permet de contribuer au ralentissement de l'air en réduisant sa vitesse.

La veine de flux tertiaire 16 comprend également un tronçon aval 22 présentant une section longitudinale convergente suivant le flux tertiaire F3. Avantageusement, cela permet d'accélérer le flux tertiaire F3 à sa sortie de l'échangeur de chaleur 18 rejoignant ainsi flux secondaire F2 pour favoriser la poussée de l'aéronef.

L'échangeur de chaleur 18 est de type « ACOC », acronyme de l'expression anglaise « Air-Cooled Oil Cooler », comprenant des passages d'huile qui s'étendent dans la veine de flux tertiaire, lesdits passages d'huiles d'étendent particulièrement dans une direction radiale et axiale entre une paroi supérieure et une paroi inférieure dudit échangeur de chaleur 18.

En effet, l'échangeur de chaleur 18 de la présente invention est différent d'un échangeur air-huile surfacique « SACOC », dans lequel l'huile reste dans les parois inférieure et supérieur et ne traverse par l'échangeur radialement.

Avantageusement, l'échangeur de chaleur « ACOC » 18, permet un échange de chaleur entre l'air et l'huile, préférablement un refroidissement de l'huile par l'air. En effet, la température de l'huile peut atteindre une température de fonctionnement allant jusqu'à 180°C et un débit atteignant les 30000 1/h.

À cet égard, l'échangeur 18 peut assurer le refroidissement de l'huile utilisée dans plusieurs composant de l'aéronef, notamment, un moteur, une boîte de vitesse, une génératrice moteur et tout composant électronique nécessitant un refroidissement.

Un seul échangeur de chaleur 18 peut combiner le refroidissement de plusieurs fonctions ou circuits d'huile de la turbomachine, et cela en fonction de différents paramètres liées au besoin de refroidissement de l'huile, i.e. températures d'entrée, débits, température de sortie demandée ou les conditions de l'air, les différents circuits peuvent être mis en contact thermique ou bien isolés. L'échangeur 18 et en particulier ses passages d'huile peuvent supporter une température basse de l'huile pouvant atteindre -54°C.

La [Fig.2] est une vue de détail de l'échangeur de chaleur 18 de la [Fig.1].

En référence à la [Fig.2], l'échangeur de chaleur 18 est du type air/huile avec des surfaces d'échange thermique avec l'air 26 qui sont en contact avec les passages d'huile 24.

Les surfaces d'échange 26 présentent une section longitudinale divergente suivant le flux tertiaire F3, i.e. la hauteur radiale séparant deux surfaces d'échange 26 en aval de l'échangeur est plus grande que la hauteur radiale séparant lesdits deux surfaces d'échanges à l'amont de l'échangeur. De plus, Les surfaces d'échange 26 présentent une section transversale qui augmente le long du flux tertiaire F3.Préférentiellement, l'échangeur de chaleur 18 est une pièce monobloc obtenue par fabrication additive, et plus préférentiellement obtenu par fusion laser sur un lit de poudre en aluminium. Les surfaces d'échanges 26 sont préférentiellement formées par des plaques de faible épaisseur, et avantageusement, chaque plaque délimite deux surfaces d'échange 26.

Les passages d'huile 24 sont disposés côte-à-côte avec un nombre compris entre 1 et 50, et préférentiellement compris entre 5 et 30, et plus préférentiellement entre 10 et 25. Alternativement, les passages d'huile 24 peuvent être fusionnés de manière à ne former qu'un seul canal.

Avantageusement, la divergence de l'échangeur de chaleur 18 est dimensionnée pour réduire la vitesse de l'air de l'ordre de 25%, i.e. le flux tertiaire F3 passe par exemple d'une vitesse de Mach 0,33 à un nombre de Mach d'environ 0,2 à la sortie de l'échangeur 18.

Afin de favoriser les échanges thermiques entre les passages d'huile 24 et les surfaces d'échange 26, 60% de la longueur cumulée desdits passages d'huile 24 s'étendent dans des plans longitudinaux répartis angulairement autour de l'axe longitudinal 8, et préférentiellement 80% de la longueur cumulée, dans lesdits plans longitudinaux. Avantageusement, les passages d'huiles 24 s'étendant dans les plans longitudinaux sont parallèles à la direction d'écoulement de l'air.

À cet effet, les 20% restants de la longueur des passages d'huile 24 correspondent à une transition 28 d'un plan longitudinal à un autre permettant à l'huile de parcourir circonférentiellement l'échangeur de chaleur 18. Le tronçon amont 20 de la veine de flux tertiaire 16 comprend un carter externe 30 et un carter interne 32. Le tronçon amont 20 comprend en outre, un carter intermédiaire externe 31 et un carter intermédiaire interne 33, chacun desdits carters intermédiaires externe 31 et interne 33 est monobloc avec l'échangeur 18.

Avantageusement, les passages d'huile 24 et/ou les surfaces d'échange 26 sont intégralement formés avec le carter intermédiaire externe 31 ainsi qu'avec le carter intermédiaire interne 33 de l'échangeur 18.

Le carter externe 30 fait partie intégrante du carter intermédiaire externe 31, et parallèlement, le carter interne 32 fait partie intégrante du carter intermédiaire interne 33.

À cet égard, le carter externe 30 comprend à une extrémité amont et/ou à une extrémité aval, une bride de fixation 34. Préférentiellement, le carter externe 30 comprend deux brides de fixation 34 agencées à la fois à l'extrémité amont et à l'extrémité aval de l'échangeur 18.

Similairement, le carter intermédiaire externe 31 de l'échangeur 18 comprend à son extrémité amont et/ou à son extrémité aval, au moins une bride de fixation 36. À cet effet, chaque bride de fixation 34 est configurée pour se fixer à la bride de fixation 36 appartenant à l'échangeur 18. De préférence, les brides de fixation 34, 36 sont circonférentiellement continues autour de l'axe longitudinale 8.

Le sens de montage de l'échangeur 18 dans la turbomachine est préférentiellement d'aval en amont, i.e. en contre sens au flux tertiaire F3. Dans cette configuration, la fixation de l'échangeur 18 au carter externe 30 peut être assurée par vissage. Dans cette configuration, l'échangeur 18 fait partie intégrante de la veine de flux tertiaire 16 et assure ainsi la continuité aérodynamique du flux tertiaire F3 au sein de la veine 16.

La fixation de l'échangeur 18 avec le carter interne 32 peut être obtenu au moyen d'une liaison rigide entre une bride de fixation appartenant au carter interne 32 avec une autre bride de fixation appartenant à l'échangeur 18, et précisément appartenant à un secteur angulaire 38 de l'échangeur 18.

En effet, le secteur angulaire 38 fait partie intégrante de l'échangeur 18 et comprend un passage d'arrivée d'huile 40 permettant la distribution de l'huile dans les passages d'huile 24. Dans cette configuration, la fixation est de préférence obtenue par vissage entre les deux brides (non illustrées) qui peuvent être disposées circonférentiellement autour de l'axe longitudinal 8.

L'échangeur 18 comprend sur son étendue totale suivant le flux tertiaire F3, une portion libre de matière 42 formant un by-pass 42, communément appelé by-pass d'air 42, et peut aussi être appelé bypass « FOD », acronyme de l'expression anglaise « Foreign Object Debris ». En effet, le rôle principal d'un by-pass d'air est de permettre le passage de débris contenu dans le flux d'air à travers la turbomachine. Les débris ou « FOD » peuvent par exemple des oiseaux, la grêle, les grêlons ou tout autre objet pouvant obstruer ou endommager l'échangeur.

À cet égard, l'échangeur 18 comprend le by-pass 42 pour permettre aux débris de traverser la veine 16 sans obturer le passage du flux tertiaire F3 à travers l'échangeur 18 ni endommager ce dernier.

En parallèle du by-pass d'air 42, une grille de protection peut être mise sur la face avant de l'échangeur 18 pour protéger davantage les passages d'huile 24 et les surfaces d'échange 26, et sans entraver leur capacité d'échange thermique.

En référence à la [Fig.1] et à la [Fig.2], le by-pass d'air 42 est adjacent au carter externe 30 du tronçon amont 22 de la veine du flux tertiaire 16. Le by-pass d'air 42 est délimité radialement vers l'extérieur par le carter intermédiaire externe 31 et plus précisément délimité radialement vers l'extérieur par une face supérieure 44 appartenant au carter intermédiaire externe 31 de l'échangeur 18, ladite face supérieure 44 est adjacente à la première paroi de guidage externe 11 appartenant au carter externe 30.

Le by-pass d'air 42 est délimité radialement vers l'intérieur par une face 45 appartenant à une paroi délimitant radialement les surfaces d'échange thermiques 26, ladite paroi ayant une hauteur radiale constante.

Le by-pass d'air 42 s'étend radialement sur une hauteur correspondant à au maximum 20% d'une hauteur radiale totale du tronçon amont 22 de la veine de flux tertiaire 16. De préférence, la hauteur du by-pass d'air 42 s'étend radialement à au maximum 15% d'une hauteur radiale totale correspondante de la section longitudinale divergente de la veine 16.

Le by-pass d'air 42 présente une hauteur radiale constante sur l'étendue totale de l'échangeur 18 suivant le flux tertiaire F3. En effet, la hauteur du by-pass d'air 42 reste constante et n'évolue nullement suivant l'écoulement de l'air car il n'est pas souhaité de modifier la vitesse de celui-ci, uniquement le passage des débris est attendu du by-pass d'air 42. Avantageusement, cela permet de limiter la différence des pertes de charge entre le by-pass d'air 42 et le reste de l'échangeur 18.

Cependant, la hauteur radiale du by-pass d'air 42 peut varier afin de compenser des éventuelles pertes de charges qui peuvent être causées par des perturbations aérodynamiques en aval de l'échangeur. À cet égard, le by-pass d'air 42 peut présenter une section longitudinale convergente et/ou divergente.

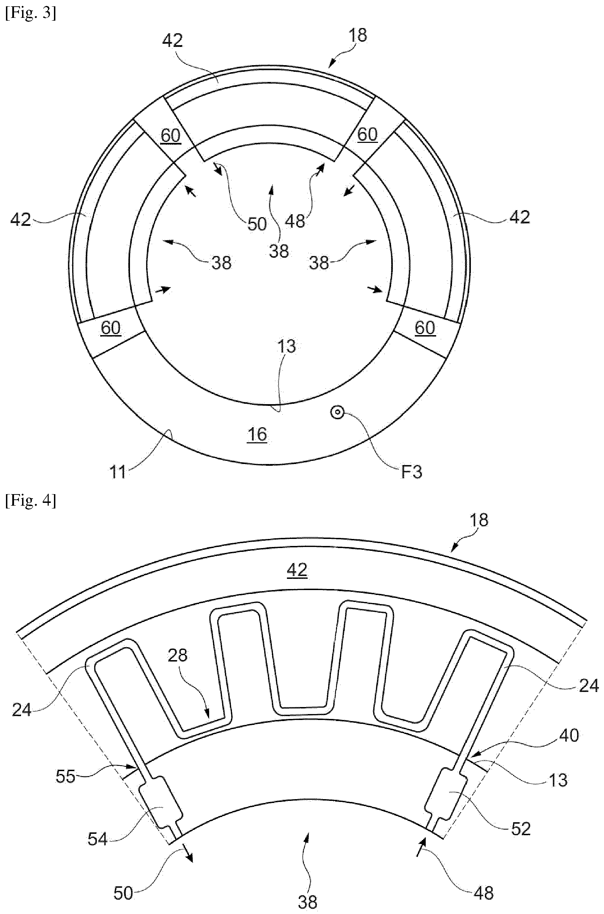

La [Fig.3] est une vue de face, i.e. dans le sens d'écoulement de l'air, de la veine de flux tertiaire 16 comprenant l'échangeur 18, de la turbomachine de la [Fig.1].

En référence à la [Fig.3], l'échangeur 18 est répartis angulairement dans la veine de flux tertiaire 16, en effet, on peut considérer qu'une pluralité d'échangeurs 18 dans la veine 16 représente un seul échangeur 18.

L'échangeur 18 comprend plusieurs secteurs angulaires 38, chaque secteur angulaire 38 comprend une arrivée d'huile 48 sur la deuxième paroi de guidage externe 13 du flux d'air radialement interne, dite paroi interne 13 à une extrémité angulaire dudit secteur 38.

Le secteur angulaire 38 comprend également à une extrémité angulaire opposée une sortie d'huile 50 sur la paroi interne 13, l'opposition d'une extrémité par rapport à l'autre est relative à un axe radial (non illustré) se situant au milieu du secteur angulaire.

L'arrivée d'huile 48 ou la sortie d'huile 50 est intégralement formée dans la paroi interne 13. Préférentiellement, l'arrivée d'huile 48 et la sortie d'huile 50 sont intégralement formée dans la paroi interne 13.

La [Fig.4] illustre une vue en coupe simplifiée de l'échangeur 18 de la turbomachine de la [Fig.1], dans laquelle le by-pass d'air 42 est situé radialement adjacent au carter externe. Les surfaces d'échanges 26 ne sont pas représentées afin de simplifier la [Fig.4].

Le secteur angulaire 38 comprend un distributeur d'huile 52 s'étendant de manière circonférentielle le long de la paroi interne 13 et un collecteur d'huile 54 s'étendant également circonférentiellement le long de la paroi interne 13.

Plusieurs secteurs angulaire 38 peuvent comprendre un seul distributeur 52 et un seul collecteur d'huile 54. Dans cette configuration, un seul distributeur peut par exemple être relié à plusieurs circuits de refroidissement de la turbomachine axiale.

Le distributeur d'huile 52 comprend l'arrivée d'huile 48 et le collecteur d'huile comprend la sortie d'huile 50. À cet égard, les passages d'huile 24 s'étendant de manière fluidique dans la veine de flux tertiaire entre l'arrivée d'huile 48 correspondante et la sortie d'huile 50 correspondante.

Un passage de sortie d'huile 55 est agencé entre les passages d'huile 24 et le collecteur d'huile 54 et un passage de mise en court-circuit peut relier le passage d'entrée d'huile 40 au passage de sortie d'huile 55.

En référence à la [Fig.2], le secteur angulaire 38 comprend un passage de mise en court-circuit 56 dudit secteur 38, également appelé by-pass d'huile 56, ce dernier est intégralement formé dans la paroi interne 13 et s'étend de manière fluidique entre l'arrivée d'huile 48 et la sortie d'huile 50 le long de la paroi interne 13. L'échangeur 18 peut comprendre plusieurs by-pass d'huile 56.

Avantageusement, le by-pass d'huile 56 permet d'assurer le fonctionnement à froid de l'échangeur 18, notamment à des températures avoisinant les -40°C, en effet, l'huile froide présente une viscosité élevée qui ne convient pas pour permettre son passage dans l'échangeur 18, l'huile passe donc dans le by-pass d'huile 56 jusqu'à ce qu'elle atteigne une viscosité convenable.

À cet égard, un autre circuit appelé circuit de décongélation (non-illustré) peut être agencé à proximité ou en contact du by-pass d'huile 56, et peut être également en contact avec les passages d'huile 24, le circuit de décongélation peut assurer le réchauffement de l'huile comprise dans l'échangeur 18.

Le by-pass d'huile 56 comprend un clapet normalement fermé 58 et apte à s'ouvrir en présence d'une différence de pression entre l'entrée d'huile 48 et la sortie d'huile 50, supérieure ou égale à une valeur limite. Le clapet 58 peut également s'ouvrir quand la viscosité de l'huile est trop élevée par rapport à un seuil préalablement identifié.

L'arrivée d'huile 48 est située sur une portion aval terminale de l'échangeur 18 alors que la sortie d'huile 50 est située sur une portion amont de l'échangeur 18. Cependant, l'inverse peut être réalisé ou à la fois l'arrivée 48 et la sortie 50 peuvent être situées au niveau de la portion aval ou amont.

On peut voir à la [Fig.4] que l'arrivée d'huile 48 est à une extrémité angulaire du secteur angulaire 38 ainsi que le passage d'entrée d'huile 40, et la sortie d'huile 50 ainsi que le passage de sortie d'huile 55 se trouvent dans l'extrémité angulaire opposée du secteur angulaire 38. Avantageusement, les passages d'huiles 24 s'étendant depuis l'arrivée d'huile 48 vers la sortie d'huile 50 s'étendent circonférentiellement sur toute l'étendue circonférentielle de l'échangeur de chaleur 18, permettant ainsi de maximiser la zone d'échange thermique entre le flux tertiaire et l'huile.

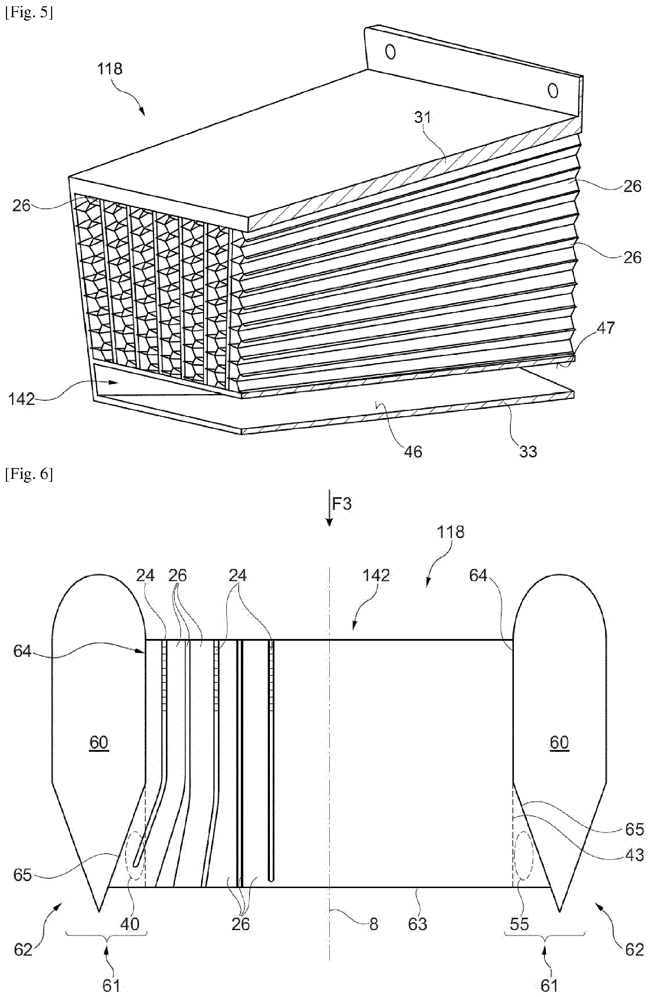

La [Fig.5] représente une vue partielle en perspective d'un échangeur 118 selon un deuxième mode de réalisation de l'invention. Il est à noter qu'une vue en perspective de l'échangeur 118 est censée avoir un profil en arc de cercle, cependant la [Fig.5] a été fortement simplifiée afin de faciliter la compréhension.

En effet, le premier mode de réalisation consiste à positionner le by-pass d'air 42 en étant adjacent au carter externe 30. Alors que le deuxième mode de réalisation consiste principalement à positionner un by-pass d'air 142, ayant la même configuration géométrique que le by-pass d'air 42 décrit précédemment. À cet égard, les surfaces d'échanges 26 ainsi que les passages d'huile et tous les autres éléments formant l'échangeur 118 sont identiques à l'échangeur 18.

Le by-pass d'air 142 est configuré pour être adjacent au carter interne 32, cela implique des ajustements structurels qui seront amplement détaillés plus loin dans cette description.

En référence à la [Fig.5], le by-pass d'air 142 est adjacent au carter interne (non illustré) du tronçon amont de la veine du flux tertiaire. Le by-pass d'air 142 est délimité radialement vers l'intérieur par le carter intermédiaire interne 33 et plus précisément délimité radialement vers l'intérieur par une face inférieure 46 appartenant au carter intermédiaire interne de l'échangeur 118, ladite face inférieure 46 est adjacente au carter interne et particulièrement adjacente à la paroi interne 13 illustrée dans les figures précédentes.

Dans cette configuration, la face inférieure 46 forme une continuité de la veine de flux tertiaire avec la paroi interne 13, on peut donc considérer que le by-pass d'air 142 est délimité radialement vers l'intérieur par la paroi interne 13.

Le by-pass d'air 142 est délimité radialement vers l'extérieur par une face 47 appartenant à une paroi délimitant radialement les surfaces d'échange thermiques 26, ladite paroi ayant une hauteur radiale constante.

Le choix du mode de réalisation de la présente invention peut être réalisé en fonction de l'agencement global des différents éléments de la turbomachine axiale, et plus précisément en fonction la position radiale du sommet d'une des pales de la roue mobile par rapport à l'échangeur de chaleur 18, 118 en combinaison avec la forme géométrique de la deuxième paroi de guidage externe 13 tel qu'indiquée dans la [Fig.1].

En effet, la modification de la position du sommet de la pale de la roue mobile et la forme géométrique de la paroi de la veine de flux tertiaire, résulte par la modification de la trajectoire des débris « FOD ».

Avantageusement, l'échangeur 18, 118 peut être fabriqué et adapté selon l'architecture de la turbomachine dans laquelle il sera monté afin d'anticiper la partie radiale de la veine 16 qui comprend le plus de risques d'impact avec les débris pour que le by-pass d'air 42, 142 y soit agencé.

La [Fig.6] représente une vue d'au-dessus en coupe de l'échangeur 118 dans la veine de flux tertiaire selon le deuxième mode de réalisation.

La turbomachine comprend des bras structuraux 60 adjacents aux secteurs angulaires et s'étendant radialement dans la veine de flux tertiaire à des jonctions entre lesdits secteurs angulaires de l'échangeur 118.

Chaque secteur angulaire de l'échangeur 118 s'étend circonférentiellement entre deux bras structuraux 60, ainsi dans le cas où l'échangeur 118 est subdivisé angulairement dans la veine de flux tertiaire, ladite subdivision peut être assurée par les bras structuraux 60.

Les bras structuraux 60 sont agencés axialement en aval du stator dans la veine de flux tertiaire, et de préférence entre le compresseur basse pression et le compresseur haute pression.

Chaque bras structural 60 comprend une portion amont comprenant un bord d'attaque, l'échangeur 118 est agencé en aval de ce dernier. Avantageusement, cet agencement permet de minimiser davantage les perturbations aérodynamiques du flux tertiaire F3 qui peuvent être causées par la roue mobile.

Le bras structural 60 présente une section transversale avec une largeur diminuant sur une moitié aval de ladite section formant une portion aval 62 convergente du bras structural 60.

La portion aval 62 de chaque bras structural 60 comprend un bord de fuite, l'échangeur 118 est agencé en amont dudit bord de fuite. Préférentiellement, l'échangeur 118 est agencé entre le bord d'attaque et ledit bord de fuite.

Avantageusement, cela permet d'améliorer la rigidité du montage de l'échangeur 118 dans la turbomachine et de maitriser davantage les pertes de charges et les perturbations aérodynamiques. De plus, les bords d'attaque des bras structuraux 60 permettent de favoriser l'échange thermique en convection entre l'huile et le flux tertiaire F3.

L'échangeur 118 s'étend circonférentiellement entre deux bras structuraux de manière à ce que ledit échangeur 118 soit en contact direct avec au moins un des deux bras structuraux, et préférentiellement en contact direct avec chacun des deux bras structuraux 60. Dans cette configuration, les surfaces d'échange thermique 26 sont adjacentes aux portions aval 62 des bras structuraux 60.

En effet, on peut voir à la [Fig.6] que l'échangeur 118 est adjacent suivant la direction axiale et circonférentielle aux portions aval 62 des bras structuraux 60. Ainsi, l'échangeur 118 est circonférentiellement en contact direct (collé) avec les portions aval 62 tout en chevauchant axialement au moins 80% d'une étendue axiale totale desdites portions aval 62. Le terme « adjacent » signifie ici que l'échangeur 118 est en contact avec au moins 80% des portions aval 62.

De préférence, les surfaces d'échange thermique 26 présentent un profil circonférentiel divergeant se conformant aux portions aval 62 des bras structuraux 60. Avantageusement, cela permet de limiter les pertes de charge et d'augmenter l'efficacité de l'échange thermique entre le flux tertiaire et l'huile au sein de l'échangeur 118.

Le profil circonférentiel divergeant des surfaces d'échange thermique 26 est formé par des profils latéraux 64 directement adjacents aux bras structuraux 60 et comprenant chacun la portion aval 62. À cet égard, chaque portion aval 62 comprend au moins un profil latéral incliné 65, ce dernier est incliné par rapport à une direction axiale et s'étend sur au moins 5% du profil latéral 64 correspondant.

Le profilé latéral incliné 65 présente une inclinaison moyenne qui dépend de son étendue axiale par rapport à celle du profilé latéral 64, l'inclinaison peut varier entre 5° et 60°.

De préférence, l'inclinaison du profil latéral incliné 65 est de l'ordre de 30° par rapport au profil latéral 64, ladite inclinaison s'étend préférentiellement sur 30% de la longueur axiale du bras structural 60.

Les passages d'huiles 24 peuvent en partie ou en totalité suivre l'inclinaison du profil latéral incliné 65 des bras structuraux 60.

Il est à noter que l'agencement de l'arrivée d'huile ainsi que la sortie d'huile dans le secteur angulaire de l'échangeur 118 dépend du mode de réalisation de l'invention.

En effet, la [Fig.6] illustre le deuxième mode de réalisation dans lequel le by-pass d'air 42 est délimité radialement vers l'intérieur par le carter interne. À cet égard, pour chaque secteur angulaire de l'échangeur 118, les passages d'arrivée d'huile 40 et de sortie d'huile 55 sont situés au niveau de la moitié aval 62 dans des projections axiales 61 de la section transversale de plus grande largeur des bras structuraux 60.

Les projections axiales 61 sont appelées portions aval terminales 61, les passages d'entrée d'huile 40 et de sortie d'huile 55 sont agencées dans lesdites portions avales terminales 61. Cela permet davantage d'éloigner circonférentiellement l'arrivée d'huile de la sortie d'huile afin de maximiser la circulation de l'huile au sein de l'échangeur 118 à l'intérieur de la veine de flux tertiaire.

Préférentiellement, l'échangeur est agencé axialement au niveau de la plus grande largeur des bras structuraux 60, cela permet avantageusement de faciliter le montage dudit échangeur qui se fait d'aval en amont.

De préférence, l'arrivée d'huile et/ou la sortie d'huile sont situées à une distance d'un bord aval 63 de l'échangeur 118 qui est inférieure à 20% de son étendue axiale totale, et plus préférablement, à une distance inférieure à 5% de son étendue totale.

On peut voir à la [Fig.6] que l'arrivée d'huile au niveau du passage d'arrivée d'huile 40 et la sortie d'huile au passage de sortie d'huile 55 sont circonférentiellement alignés. L'arrivée d'huile et la sortie d'huile sont tous deux à une distance du bord aval 63 comprise entre 5% et 20% de l'étendue axiale totale de l'échangeur 118.

Le by-pass d'air 142 est délimité circonférentiellement par les côtés 43, ces derniers peuvent être conformant au profil latéral 64, dans la [Fig.6], les côtés 43 ne sont pas conformant avec le profil latéral incliné 65.

Le passage d'arrivée d'huile 40 ainsi que le passage de sortie d'huile 55 s'étendent radialement et latéralement au by-pass d'air 142, ces deux derniers sont distants l'un de l'autre d'une distance supérieure à la largeur circonférentielle du by-pass d'air 142, i.e. entre deux côtés 43.

De préférence, le passage d'arrivée d'huile 40 est distant du passage de sortie d'huile 55 d'une distance supérieure à au maximum 20% de plus que la largeur circonférentielle du by-pass d'air 142, et plus préférentiellement, d'une distance supérieure à au maximum 5% de plus que la largeur circonférentielle du by-pass d'air 142.

Il est à noter que l'agencement du passage d'arrivée d'huile 40 et du passage de sortie d'huile 55 illustré dans la [Fig.6] peut convenir pour l'échangeur 18 selon le premier mode de réalisation.

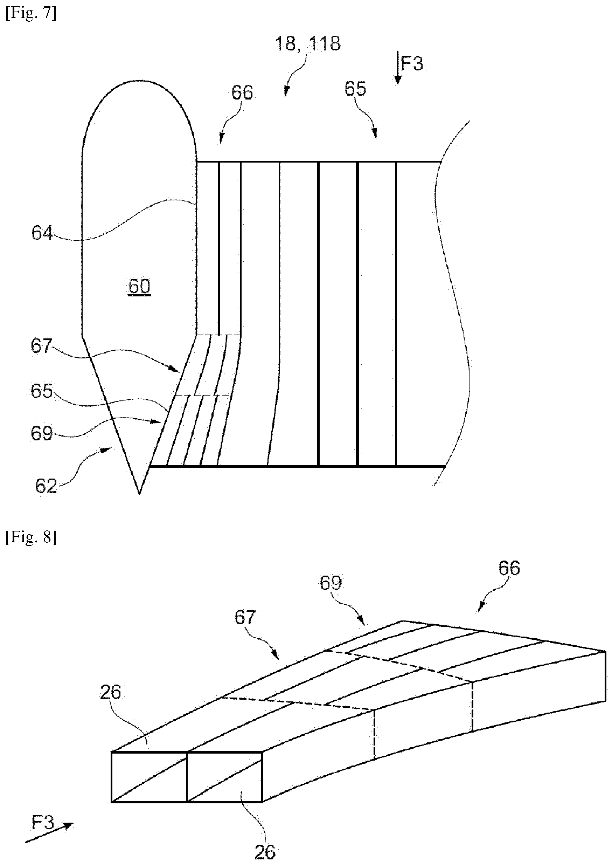

La [Fig.7] représente une vue d'au-dessus partielle de l'échangeur 18 ou 118 illustrant un troisième mode de réalisation de l'invention dans laquelle l'échangeur 18, 118 présente une évolution du nombre par unité de surface de ses surfaces d'échange 26, dit évolution de densité, se trouvant dans une portion adjacente 66 aux bras structuraux 60, par rapport au nombre par unité de surface des surfaces d'échange 26 se trouvant dans une partie centrale 68.

La portion adjacente 66 peut être considérée comme étant une couche limite à l'échangeur, et l'évolution de la densité est dans la direction circonférentielle et elle est d'au moins 20% et préférentiellement de 50%.

L'échangeur 18, 118 présente donc 50% de surfaces d'échange 26 en plus au niveau de la portion adjacente 66 comparé au nombre de surfaces d'échange au niveau de la partie centrale 68.

Avantageusement, l'évolution de densité dans la direction circonférentielle permet de ralentir l'air et d'accompagner son écoulement jusqu'à la portion aval 62, favorisant ainsi les échanges thermiques entre l'huile et l'air. La diminution des pertes de charges et la diminution de la génération de la trainée au niveau de l'écoulement du flux tertiaire F3 présentent également un autre avantage de l'invention.

La [Fig.8] illustre l'évolution de la densité des surfaces d'échange 26 dans la direction axiale et circonférentielle.

Les surfaces d'échange 26 de l'échangeur présentent une section transversale ayant un motif de préférence sous forme hexagonale, cependant, afin d'illustrer l'évolution de manière simplifiée, un motif rectangulaire a été illustré dans les figures 7 et 8.

En référence à la [Fig.7] et à la [Fig.8], le nombre de surfaces d'échange 26 par unité de surface augmente dans la partie adjacente 66 au fur et à mesure de l'augmentation circonférentielle de la section transversale au flux tertiaire F3.

En effet, l'écoulement du flux tertiaire F3 diverge progressivement dans la direction circonférentielle pour suivre le profil latéral incliné 65 de la portion aval 62 de chaque bras structural 60.

À cet effet, l'augmentation du nombre le de surfaces d'échange 26 par unité de surface se fait suivant un ou plusieurs secteurs 67, 69, et entre chaque secteur de la partie adjacente 66, l'augmentation par unité de surface du nombre des surfaces d'échange 26 est d'au moins 20% et préférentiellement 50%.

L'évolution de la densité des surfaces d'échange est également possible dans la direction radiale en suivant la divergence de la veine de flux tertiaire dans la section longitudinale, cela permet d'avoir les mêmes avantages que l'évolution de la densité dans les directions axiale et circonférentielle.

Avantageusement, l'agencement de l'échangeur de chaleur selon l'invention et notamment la veine de flux tertiaire divergente, permet d'alimenter l'échangeur avec un air suffisamment froid et suffisamment lent pour qu'à la fois l'efficacité du refroidissement de l'huile soit assurée et que les pertes aérodynamiques liées à la présence de l'échangeur soient limitées, favorisant ainsi la poussée de l'aéronef tout en contribuant à la réduction des émissions des gaz carboniques.

Il est à noter que l'invention ne se limite pas aux seuls exemples décrits sur les figures. Les enseignements de la présente invention peuvent notamment être applicables à un autre type de turbomachine.

Chaque caractéristique technique de chaque exemple illustré est applicable aux autres exemples. Notamment, l'évolution de la densité des surfaces d'échange thermique peut s'appliquer à l'échangeur dans les trois directions, avec un by-pass d'air radialement adjacent au carter externe ou interne.

## Revendications

1. Turbomachine axiale (2), comprenant :
- un premier bec de séparation (10) apte à séparer un flux d'air entrant (F) en un flux d'air radialement interne (F') et un flux d'air radialement externe (F2), dit flux secondaire (F2) ;
- un deuxième bec de séparation (14) apte à séparer le flux d'air radialement interne (F') en un flux primaire (F1) et un flux tertiaire (F3), ledit flux tertiaire (F3) étant dans une veine de flux tertiaire (16) radialement externe audit flux primaire (F1) ; et
- un échangeur de chaleur (18, 118) de type air/huile disposé dans la veine de flux tertiaire (16) et comprenant des surfaces d'échange thermique avec l'air (26) et des passages d'huile (24) s'étendant dans ladite veine de flux tertiaire (16) ; et
- des bras structuraux (60) s'étendant radialement au travers de la veine de flux tertiaire (16) ;
**caractérisée en ce que** chaque bras structural (60) présente dans la veine de flux tertiaire (16) une section transversale avec une portion aval (62) présentant une largeur diminuant vers l'aval, l'échangeur de chaleur (18, 118) étant adjacent auxdites portions aval (62) des bras structuraux (60), et **en ce que** les surfaces d'échange thermique (26) sont adjacentes aux portions aval (62) des bras structuraux (60), lesdites surfaces d'échange thermique (26) présentent un profil circonférentiel divergeant se conformant auxdites portions aval (62).

2. Turbomachine axiale (2), selon la revendication 1, **caractérisée en ce que** le profil circonférentiel divergeant des surfaces d'échange thermique (26) est formé par des profils latéraux (64) directement adjacents aux bras structuraux (60), lesdits profils latéraux (64) comprenant chacun un profil latéral incliné (65) par rapport à une direction axiale.

3. Turbomachine axiale (2), selon l'une des revendications 1 à 2, **caractérisée en ce que** ladite turbomachine axiale (2) comprend un stator disposé dans la veine du flux tertiaire (16) et en amont de chaque bras structural (60).

4. Turbomachine axiale (2), selon l'une des revendications 1 à 3, **caractérisée en ce que** chaque bras structural (60) est disposé axialement entre un compresseur basse pression (17) et un compresseur haute pression (15).

5. Turbomachine axiale (2), selon l'une des revendications 1 à 4, **caractérisée en ce que** chaque bras structural (60) comprend une portion amont comprenant un bord d'attaque, l'échangeur de chaleur (18, 118) étant agencé en aval dudit bord d'attaque.

6. Turbomachine axiale (2), selon l'une des revendications 1 à 5, **caractérisée en ce que** la portion aval (62) de chaque bras structural (60) comprend un bord de fuite, l'échangeur de chaleur (18, 118) étant agencé entre le bord d'attaque et ledit bord de fuite.

7. Turbomachine axiale (2), selon l'une des revendications 1 à 6, **caractérisée en ce que** l'échangeur de chaleur (18, 118) est agencé au niveau de la plus grande largeur des bras structuraux (60).

8. Turbomachine axiale (2), selon l'une des revendications 1 à 7, **caractérisée en ce que** ladite turbomachine axiale (2) comprend un carter interne (32) disposé entre le flux primaire (F1) et le flux tertiaire (F3), ledit carter interne (32) comprend un canal « VBV » (19) ayant une sortie au niveau de la veine de flux tertiaire (16), ladite sortie étant disposée en aval de l'échangeur de chaleur (18, 118).

9. Turbomachine axiale (2), selon l'une des revendications 1 à 8, **caractérisée en ce que** l'échangeur de chaleur (18, 118) s'étend circonférentiellement entre deux bras structuraux (60) de manière à ce que ledit échangeur de chaleur (18, 118) soit en contact direct avec chacun desdits deux bras structuraux (60).

10. Turbomachine axiale (2), selon l'une des revendications 1 à 9, **caractérisée en ce que** les surfaces d'échange thermique (26) s'étendent radialement et sont réparties angulairement dans la veine de flux tertiaire (16), les surfaces d'échange thermique (26) adjacentes aux portions aval (62) des bras structuraux présentant une inclinaison par rapport à une direction axiale de manière à se conformer auxdites portions aval (62).

11. Turbomachine axiale (2), selon la revendication 10, **caractérisée en ce que** les surfaces d'échange thermique (26) comprennent des passages d'huile (24) s'étendant de manière fluidique entre une paroi interne (13) et une paroi externe (11) de la veine de flux tertiaire (16), et préférentiellement la paroi interne (13) et la paroi externe (11) de la veine de flux tertiaire (16) sont intégralement formées avec les surfaces d'échange (26).

12. Turbomachine axiale (2), selon l'une des revendications 1 à 11, **caractérisée en ce que** le nombre par unité de surface des surfaces d'échange thermique (26) adjacentes au profil latéral (64) est supérieur d'au moins 20% au nombre par unité de surface des surfaces d'échange thermique (26) se trouvant dans une partie centrale (68) de l'échangeur (18, 118).

13. Turbomachine axiale (2), selon l'une des revendications 1 à 12, **caractérisée en ce que** le nombre de surfaces d'échange thermique (26) par unité de surface augmente au fur et à mesure de l'augmentation circonférentielle de la section transversale aux surfaces d'échange thermique (26).

14. Turbomachine axiale (2), selon la revendication 13, **caractérisée en ce que** le nombre par unité de surface des surfaces d'échange thermique (26) adjacentes à la portion aval (62) augmente de manière progressive suivant l'inclinaison du profil latéral incliné (65).

## Patentansprüche

1. Axial-Turbomaschine (2), umfassend :
- einen ersten Trenneinsatz (10), der geeignet ist, einen einströmenden Luftstrom (F) in einen radial innengelegenen Luftstrom (F') und einen radial außengelegenen Luftstrom (F2), sogenannten Sekundärstrom (F2), aufzuteilen ;
- einen zweiten Trenneinsatz (14), der geeignet ist, den radial innengelegenen Luftstrom (F') in einen Primärstrom (F1) und einen Tertiärstrom (F3) aufzuteilen, wobei der Tertiärstrom (F3) in einem tertiären Strömenbereich (16) radial außen an dem Primärstrom (F1) liegt; und
- einen luft-öl Typ Wärmetauscher (18, 118), der im tertiären Strömenbereich (16) angeordnet ist und Wärmeübertragungsflächen (26) mit der Luft sowie Ölkanäle (24) umfasst, die sich in dem tertiären Strömenbereich (16) erstrecken; und
- Strukturträger (60), die sich radial durch den tertiären Strömenbereich (16) erstrecken;
**dadurch gekennzeichnet, dass** jeder Strukturträger (60) im tertiären Strömenbereich (16) einen Querschnitt mit einem nach unten breiter werdenden Abschnitt (62) aufweist, wobei der Wärmetauscher (18, 118) an den genannten nach unten breiter werdenden Abschnitten (62) der Strukturträger (60) angrenzt, und dass die Wärmeübertragungsflächen (26) an den nach unten breiter werdenden Abschnitten (62) der Strukturträger (60) angrenzen, wobei die genannten Wärmeübertragungsflächen (26) ein divergierendes Umfangsprofil aufweisen, das sich den genannten nach unten breiter werdenden Abschnitten (62) anpasst.

2. Axial-Turbomaschine (2), nach Anspruch 1, **dadurch gekennzeichnet, dass** das divergierende Umfangsprofil der Wärmeübertragungsflächen (26) aus seitlichen Profilen (64) besteht, die direkt an die Strukturträger (60) angrenzen, wobei die genannten seitlichen Profile (64) jeweils ein seitliches Profil (65) umfassen, das hinsichtlich einer axialen Richtung geneigt ist.

3. Axial-Turbomaschine (2), nach einem der Ansprüche 1 bis 2, **dadurch gekennzeichnet, dass** die genannte Axial-Turbomaschine (2) einen Stator umfasst, der im tertiären Strömenbereich (16) und stromaufwärts von jedem Strukturträger (60) angeordnet ist.

4. Axial-Turbomaschine (2), nach einem der Ansprüche 1 bis 3, **dadurch gekennzeichnet, dass** jeder Strukturträger (60) axial zwischen einem Niederdruckkompressor (17) und einem Hochdruckkompressor (15) angeordnet ist.

5. Axial-Turbomaschine (2), nach einem der Ansprüche 1 bis 4, **dadurch gekennzeichnet, dass** jeder Strukturträger (60) einen vorderen Abschnitt umfasst, der eine Angriffskante umfasst, wobei der Wärmetauscher (18, 118) stromabwärts von der genannten Angriffskante angeordnet ist.

6. Axial-Turbomaschine (2), nach einem der Ansprüche 1 bis 5, **dadurch gekennzeichnet, dass** der nach unten breiter werdende Abschnitt (62) jedes Strukturträgers (60) eine Rückkante umfasst und der Wärmetauscher (18, 118) zwischen der Angriffskante und der genannten Rückkante angeordnet ist.

7. Axial-Turbomaschine (2), nach einem der Ansprüche 1 bis 6, **dadurch gekennzeichnet, dass** der Wärmetauscher (18, 118) an der breitesten Stelle der Strukturträger (60) angeordnet ist.

8. Axial-Turbomaschine (2), nach einer der Ansprüche 1 bis 7, **dadurch gekennzeichnet, dass** die genannte Axial-Turbomaschine (2) einen inneren Airframe (32) umfasst, der zwischen dem Primärstrom (F1) und dem Tertiärstrom (F3) angeordnet ist, wobei der genannte innere Airframe (32) einen "VBV"-Kanal (19) umfasst, der eine Austrittsöffnung im tertiären Strömenbereich (16) hat, wobei die genannte Austrittsöffnung stromabwärts von dem Wärmetauscher (18, 118) angeordnet ist.

9. Axial-Turbomaschine (2), nach einer der Ansprüche 1 bis 8, **dadurch gekennzeichnet, dass** der Wärmetauscher (18, 118) sich rund um zwei Strukturträger (60) erstreckt, so dass der genannte Wärmetauscher (18, 118) direkt mit jedem der genannten zwei Strukturträger (60) in Kontakt steht.

10. Axial-Turbomaschine (2), nach einer der Ansprüche 1 bis 9, **dadurch gekennzeichnet, dass** die Wärmeübertragungsflächen (26) sich radial erstrecken und im tertiären Strömenbereich (16) winkelig verteilt sind, wobei die Wärmeübertragungsflächen (26) an den stromabwärtigen Abschnitten (62) der Strukturträger anliegen und eine Neigung in Bezug auf eine axiale Richtung aufweisen, so dass sie sich den genannten stromabwärtigen Abschnitten (62) anpassen.

11. Axial-Turbomaschine (2), nach Anspruch 10, **dadurch gekennzeichnet, dass** die Wärmeübertragungsflächen (26) Ölkanäle (24) umfassen, die sich fluidisch zwischen einer inneren Wand (13) und einer äußeren Wand (11) des tertiären Strömenbereichs (16) erstrecken, wobei die genannte innere Wand (13) und die genannte äußere Wand (11) des tertiären Strömenbereichs (16) integral mit den Wärmeübertragungsflächen (26) ausgebildet sind.

12. Axial-Turbomaschine (2), nach einer der Ansprüche 1 bis 11, **dadurch gekennzeichnet, dass** die Anzahl pro Flächeneinheit der Wärmeübertragungsflächen (26), die dem seitlichen Profil (64) benachbart sind, mindestens 20 % höher ist als die Anzahl pro Flächeneinheit der Wärmeübertragungsflächen (26), die sich in einem zentralen Bereich (68) des Wärmetauschers (18, 118) befinden.

13. Axial-Turbomaschine (2), nach einer der Ansprüche 1 bis 12, **dadurch gekennzeichnet, dass** die Anzahl der Wärmeübertragungsflächen (26) pro Flächeneinheit mit der Zunahme der Umfangserstreckung des Querschnitts zu den Wärmeübertragungsflächen (26) zunimmt.

14. Axial-Turbomaschine (2), nach Anspruch 13, **dadurch gekennzeichnet, dass** die Anzahl pro Flächeneinheit der Wärmeübertragungsflächen (26), die den stromabwärtigen Abschnitt (62) benachbart sind, progressiv entsprechend der Neigung des geneigten seitlichen Profils (65) zunimmt.

## Claims

1. An axial turbomachine (2), comprising :
- a first splitter nose (10) suitable for splitting an incoming air flow (F) into a radially inner air flow (F') and a radially outer air flow (F2), said radially outer air flow (F2) being referred to as the secondary flow (F2) ;
- a second splitter nose (14) suitable for splitting the radially inner air flow (F') into a primary flow (F1) and a tertiary flow (F3), said tertiary flow (F3) being within a tertiary flow vein (16) radially external to said primary flow (F1); and
- a heat exchanger (18, 118) of the air/oil type disposed in the tertiary flow vein (16) and including heat exchange surfaces (26) with air and oil passages (24) extending within said tertiary flow vein (16); and
- structural arms (60) extending radially through the tertiary flow vein (16); **characterized in that** each structural arm (60) has a cross-section within the tertiary flow vein (16) with a downstream portion (62) featuring a width decreasing toward downstream, the heat exchanger (18, 118) being adjacent to said downstream portions (62) of the structural arms (60), and **in that** the heat exchange surfaces (26) are adjacent to the downstream portions (62) of the structural arms (60), said heat exchange surfaces (26) having a circumferentially diverging profile conforming to said downstream portions (62).

2. The axial turbomachine (2), according to claim 1, **characterized in that** the circumferentially diverging profile of the heat exchange surfaces (26) is formed by lateral profiles (64) directly adjacent to the structural arms (60), said lateral profiles (64) each including a lateral profile inclined (65) relative to an axial direction.

3. The axial turbomachine (2), according to one of claims 1 to 2, **characterized in that** said axial turbomachine (2) includes a stator located within the tertiary flow vein (16) and upstream of each structural arm (60).

4. The axial turbomachine (2), according to one of claims 1 to 3, **characterized in that** each structural arm (60) is axially located between a low pressure compressor (17) and a high pressure compressor (15).

5. The axial turbomachine (2), according to one of claims 1 to 4, **characterized in that** each structural arm (60) includes an upstream portion featuring a leading edge, the heat exchanger (18, 118) being arranged downstream of said leading edge.

6. The axial turbomachine (2), according to one of claims 1 to 5, **characterized in that** the downstream portion (62) of each structural arm (60) includes a trailing edge, the heat exchanger (18, 118) being arranged between the leading edge and said trailing edge.

7. The axial turbomachine (2), according to one of claims 1 to 6, **characterized in that** the heat exchanger (18, 118) is arranged at the widest section of the structural arms (60).

8. The axial turbomachine (2), according to one of claims 1 to 7, **characterized in that** said axial turbomachine (2) includes an inner casing (32) disposed between the primary flow (F1) and the tertiary flow (F3), said inner casing (32) comprises a "VBV" channel (19) having an outlet at the tertiary flow vein (16), said outlet being disposed downstream of the heat exchanger (18, 118).

9. The axial turbomachine (2), according to one of claims 1 to 8, **characterized in that** the heat exchanger (18, 118) extends circumferentially between two structural arms (60) so that said heat exchanger (18, 118) is in direct contact with each of said two structural arms (60).

10. The axial turbomachine (2), according to one of claims 1 to 9, **characterized in that** the heat exchange surfaces (26) extend radially and are angularly distributed in the tertiary flow vein (16), the heat exchange surfaces (26) adjacent to the downstream portions (62) of the structural arms having an inclination relative to an axial direction so as to conform to said downstream portions (62).

11. The axial turbomachine (2), according to claim 10, **characterized in that** the heat exchange surfaces (26) comprise oil passages (24) extending fluidically between an inner wall (13) and an outer wall (11) of the tertiary flow vein (16), and preferably the inner wall (13) and the outer wall (11) of the tertiary flow vein (16) are integrally formed with the heat exchange surfaces (26).

12. The axial turbomachine (2), according to one of claims 1 to 11, **characterized in that** the number per unit area of the heat exchange surfaces (26) adjacent to the lateral profile (64) is at least 20% higher than the number per unit area of the heat exchange surfaces (26) located in a central part (68) of the heat exchanger (18, 118).

13. The axial turbomachine (2), according to one of claims 1 to 12, **characterized in that** the number of heat exchange surfaces (26) per unit area increases as the circumferential increase in the cross section relative to the heat exchange surfaces (26).

14. The axial turbomachine (2), according to claim 13, **characterized in that** the number per unit area of the heat exchange surfaces (26) adjacent to the downstream portion (62) increases progressively following the inclination of the inclined lateral profile (65).
